# EUROPÄISCHE PATENTANMELDUNG

(11) **EP 4 261 330 A1**
(43) Veröffentlichungstag der Anmeldung: **18.10.2023**
(21) Anmeldenummer: 23166896.3
(22) Anmeldetag: 06.04.2023
(51) Int. Cl.: D01H 4/14, D01H 13/32

(54) **VERFAHREN ZUR LEISTUNGSSTEUERUNG EINER TEXTILMASCHINE, LEISTUNGSSTEUEREINHEIT SOWIE SPINNMASCHINE**

(30) Priorität: 13.04.2022 DE 102022109107
(71) Anmelder: Saurer Spinning Solutions GmbH & Co. KG, 52531 Übach-Palenberg (DE)
(72) Erfinder: Geisler, Robert, 41844 Wegberg (DE); Spitzer, Michael, 52156 Monschau-Kalterherberg (DE)
(74) Vertreter: Schniedermeyer, Markus

(57) **Zusammenfassung**

Die Erfindung betrifft ein Verfahren zur Leistungssteuerung einer Textilmaschine mit mehreren zugleich betriebenen Arbeitsstellen sowie mit wenigstens einem Netzteil zur gemeinsamen Leistungsversorgung der mehreren Arbeitsstellen, eine Leistungssteuereinheit für eine solche Textilmaschine sowie eine Spinnmaschine mit einer solchen Leistungssteuereinheit. Um ein Verfahren zur Leistungssteuerung einer Textilmaschine, eine Leistungssteuereinheit für eine solche Textilmaschine sowie eine Spinnmaschine mit einer solchen Leistungssteuereinheit bereitzustellen, die ein schnelles Hochlaufen der Textilmaschine ermöglichen und entsprechend Verzögerungen und Ausfallzeiten im Betriebsablauf minimieren, ist vorgesehen, dass das Verfahren als Verfahrensschritte zunächst ein Ermitteln der benötigten elektrischen Leistung jeder der Arbeitsstellen, gefolgt von einem Ermitteln der zugleich ausführbaren Betriebsvorgänge, insbesondere der zugleich start- bzw. hochfahrbaren Arbeitsstellen, auf Basis der ermittelten benötigten Leistung sowie einer maximalen Leistung des Netzteils aufweist. Zudem werden optimierte Betriebsdaten der mehreren, gemeinsam mittels eines Netzteils versorgten Arbeitsstellen erstellt, um die maximale Leistung des Netzteils bestmöglich auszunutzen, wobei das Ermitteln der benötigten elektrischen Leistung und/oder das Ermitteln der zugleich ausführbaren Betriebsvorgänge und/oder das Erstellen optimierter Betriebsdaten unter Berücksichtigung der aktuellen Partiedaten erfolgt.

## Beschreibung

Die Erfindung betrifft ein Verfahren zur Leistungssteuerung einer Textilmaschine mit mehreren zugleich betriebenen Arbeitsstellen sowie mit wenigstens einem Netzteil zur gemeinsamen Leistungsversorgung der mehreren Arbeitsstellen, eine Leistungssteuereinheit für eine solche Textilmaschine sowie eine Spinnmaschine mit einer solchen Leistungssteuereinheit.

Textilmaschinen und insbesondere Spinnmaschinen sind in vielfältiger Weise aus dem Stand der Technik bekannt und werden dabei üblicherweise zum Herstellen eines Garns aus Fasermaterial verwendet. Dabei weist eine Spinnmaschine gewöhnlich eine Vielzahl von Arbeitsstellen mit jeweils einem elektrisch betriebenen Spinnrotor zum Spinnen des Garns auf. Die elektrische Leistungsversorgung der Spinnmaschine und insbesondere der elektrischen Motoren der Spinnrotoren erfolgt dabei über wenigstens ein Netzteil, wobei jeweils mehrere Arbeitsstellen, beispielsweise vier Arbeitsstellen, durch ein gemeinsames Netzteil mit Leistung versorgt werden.

Im regulären Spinnbetrieb stellt diese Aufteilung der elektrischen Leistung eines Netzteils auf mehrere Arbeitsstellen einer Spinnmaschine zumeist keine Herausforderung dar. Jedoch werden die Spinnrotoren bei einer sehr hohen Umdrehungszahl von üblicherweise mehr als 200.000 U/min betrieben, wobei aufgrund der zu beschleunigenden Masse des Spinnrotors beim Hochlaufen des Spinnrotors eine große elektrische Leistung notwendig ist, sodass das gemeinsame Netzteil nicht ausreichend Leistung zur Verfügung stellen kann, um alle Spinnrotoren zugleich hochlaufen zu lassen.

Daher ist es üblich, die gemeinsam mittels eines Netzteils betriebenen Spinnrotoren sequentiell zu starten, wobei jeweils der nächste Spinnrotor erst gestartet wird, wenn der vorherige Spinnrotor vollständig hochgelaufen ist. Dies dauert typischerweise deutlich länger als eine Minute pro Spinnrotor, sodass die gesamte Spinnmaschine erst nach einem langwierigen Hochfahrprozess betriebsbereit ist, was den Betriebsablauf beim Anspinnen sowie bei einem Hochlaufen mehrerer Arbeitsstellen nach einer Störung verzögert.

Der Erfindung liegt daher die Aufgabe zugrunde, ein Verfahren zur Leistungssteuerung einer Textilmaschine, eine Leistungssteuereinheit für eine solche Textilmaschine sowie eine Spinnmaschine mit einer solchen Leistungssteuereinheit bereitzustellen, die ein schnelles Hochlaufen der Textilmaschine ermöglichen und entsprechend Verzögerungen und Ausfallzeiten im Betriebsablauf minimieren.

Die Aufgabe wird erfindungsgemäß durch ein Verfahren zur Leistungssteuerung einer Textilmaschine nach Anspruch 1, eine Leistungssteuereinheit für eine solche Textilmaschine nach Anspruch 11 sowie eine Spinnmaschine mit einer solchen Leistungssteuereinheit nach Anspruch 12 gelöst. Vorteilhafte Weiterbildungen der Erfindung sind in den abhängigen Ansprüchen angegeben.

Das erfindungsgemäße Verfahren zur Leistungssteuerung einer Textilmaschine mit mehreren zugleich betriebenen Arbeitsstellen sowie mit wenigstens einem Netzteil zur gemeinsamen Leistungsversorgung der mehreren Arbeitsstellen weist als Verfahrensschritte zunächst ein Ermitteln der benötigten elektrischen Leistung jeder der Arbeitsstellen, gefolgt von einem Ermitteln der zugleich ausführbaren Betriebsvorgänge, insbesondere der zugleich start- bzw. hochfahrbaren Arbeitsstellen, auf Basis der ermittelten benötigten Leistung sowie einer maximalen Leistung des Netzteils auf. Zudem werden optimierte Betriebsdaten der mehreren, gemeinsam mittels eines Netzteils versorgten Arbeitsstellen erstellt, um die maximale Leistung des Netzteils bestmöglich auszunutzen, wobei das Ermitteln der benötigten elektrischen Leistung und/oder das Ermitteln der zugleich ausführbaren Betriebsvorgänge und/oder das Erstellen optimierter Betriebsdaten unter Berücksichtigung der aktuellen Partiedaten erfolgt.

Die erfindungsgemäße Leistungssteuereinheit für eine Textilmaschine mit mehreren zugleich betriebenen Arbeitsstellen sowie mit wenigstens einem Netzteil zur gemeinsamen Leistungsversorgung mehrerer Arbeitsstellen ist gebildet, um die benötigte elektrische Leistung jeder der Arbeitsstellen zu ermitteln, die zugleich ausführbaren Betriebsvorgänge, insbesondere der zugleich start- bzw. hochfahrbaren Arbeitsstellen, auf Basis der ermittelten benötigten Leistung sowie weiterhin auf Basis einer maximalen Leistung des Netzteils zu ermitteln, und optimierte Betriebsdaten der mehreren, gemeinsam mittels eines Netzteils versorgten Arbeitsstellen zu erstellen, um die maximale Leistung des Netzteils bestmöglich zu nutzen, wobei das Ermitteln der benötigten elektrischen Leistung und/oder das Ermitteln der zugleich ausführbaren Betriebsvorgänge und/oder das Erstellen optimierter Betriebsdaten unter Berücksichtigung der aktuellen Partiedaten erfolgt.

Schließlich betrifft die Erfindung noch eine Spinnmaschine mit einer Leistungssteuereinheit, insbesondere einer erfindungsgemäßen Leistungssteuereinheit, mit mehreren zugleich betriebenen Arbeitsstellen mit jeweils einem Spinnrotor sowie mit wenigstens einem Netzteil zur gemeinsamen Leistungsversorgung mehrerer Arbeitsstellen, wobei die Leistungssteuereinheit derart gebildet ist, dass diese die benötigte elektrische Leistung jeder der Arbeitsstellen ermittelt, die zugleich hochzufahrenden und/oder zu betreibenden Spinnrotoren auf Basis der ermittelten benötigten Leistung sowie einer maximalen Leistung des Netzteils ermittelt und optimierte Betriebsdaten der mehreren, gemeinsam mittels eines Netzteils versorgten Arbeitsstellen erstellt, um die maximale Leistung des Netzteils bestmöglich zu nutzen, wobei das Ermitteln der benötigten Leistung und/oder das Ermitteln der zugleich hochzufahrenden bzw. zu betreibenden Spinnrotoren und/oder das Erstellen optimierter Betriebsdaten unter Berücksichtigung der aktuellen Partiedaten erfolgt.

Die Erfinder haben erkannt, dass die Hochlaufzeit jedes Spinnrotors von den Parametern und Daten der Partie abhängt und daher keine partieunabhängige Leistungssteuerung erfolgreich durchgeführt werden kann. Eine Berücksichtigung der Partiedaten bei der Steuerung des Hochlaufens der Spinnrotoren sowie ggf. auch dem Starten weiterer Komponenten der Arbeitsstelle ermöglicht es hingegen in vorteilhafter Weise, die Maschinenhochlaufzeit, d.h. die Zeit bis zur vollständigen Betriebsbereitschaft aller Arbeitsstellen, zu optimieren, sodass die Textilmaschine deutlich schneller betriebsbereit ist. Aber auch im laufenden Betrieb der Textilmaschine können die Ausfallzeiten einzelner Arbeitsstellen verringert werden, da mittels des erfindungsgemäßen Verfahrens ein schnelleres Hochlaufen zwischenzeitlich angehaltener Arbeitsstellen während des Betriebs der übrigen Arbeitsstellen ermöglicht wird.

Bei einer Textilmaschine kann es sich grundsätzlich um eine beliebige, ein textiles Produkt verarbeitende und/oder herstellende Maschine handeln. Bevorzugt ist die Textilmaschine eine Spinnmaschine, besonders bevorzugt eine Rotorspinnmaschine und ganz besonders bevorzugt eine Offen-End-Rotorspinnmaschine.

Die Textilmaschine weist erfindungsgemäß mehrere Arbeitsstellen auf, die bevorzugt zueinander identisch gebildet sind. Jede Arbeitsstelle weist dabei wenigstens einen und bevorzugt mehrere elektrische Verbraucher auf, wobei besonders bevorzugt alle Arbeitsstellen wenigstens hinsichtlich ihrer elektrischen Verbraucher identisch gebildet sind. Grundsätzlich können sich die elektrischen Verbraucher mehrerer Arbeitsstellen jedoch auch voneinander unterscheiden bzw. eine Arbeitsstelle kann zusätzliche Verbraucher aufweisen. Bei einer Arbeitsstelle einer Spinnmaschine ist ein wesentlicher elektrischer Verbraucher ein elektrischer Motor und insbesondere ein elektrischer Antriebsmotor eines Spinnrotors.

Neben einer individuellen Arbeitsstelle zugeordneten elektrischen Verbrauchern kann es zudem auch noch elektrische Verbraucher, beispielsweise Mittel zum Erzeugen eines Unterdrucks, Servicewagen, Steuereinheiten, Reinigungseinheiten oder dergleichen, geben, die nicht einer spezifischen Arbeitsstelle, sondern mehreren Arbeitsstellen gemeinsam zugeordnet sind. Dabei können solche gemeinsamen Verbraucher mittels eines eigenen bzw. von dem Netzteil der Arbeitsstellen unabhängigen Netzteils betrieben werden oder aber auch in die Leistungsversorgung der Arbeitsstellen eingebunden sein und insbesondere dann mittels eines mehreren Arbeitsstellen zugeordneten Netzteils betrieben werden. In diesem Fall müssen dann auch die gemeinsamen Verbraucher bei einer entsprechenden Ausführung des erfindungsgemäßen Verfahrens zur Leistungsteuerung berücksichtigt werden.

Bevorzugt weisen jedoch alle Arbeitsstellen wenigstens einen elektrischen Verbraucher und insbesondere einen elektrisch angetriebenen Spinnrotor auf, der mittels einer gemeinsamen Leistungsversorgung betrieben wird. Unter einer gemeinsamen Leistungsversorgung wird dabei verstanden, dass wenigstens jeweils ein Verbraucher mehrerer Arbeitsstellen an ein gemeinsames Netzteil angeschlossen ist und somit gemeinsam mittels der verfügbaren Gesamt- bzw. Nennleistung des Netzteils betrieben werden muss. Dabei kann das Netzteil eine beliebige Leistungsversorgungseinheit sein. Das Netzteil ist bevorzugt ein Spinnstellennetzteil für mehrere Arbeitsstellen einer Spinnmaschine, bevorzugt für zwischen 2 und 10 Spinnstellen, besonders bevorzugt für zwischen 2 und 6 Spinnstellen und ganz besonders bevorzugt für 4 Spinnstellen einer Spinnmaschine.

Das erfindungsgemäße Verfahren sieht als ersten Verfahrensschritt ein Ermitteln der benötigten elektrischen Leistung jeder der Arbeitsstellen vor, wobei dieses Ermitteln der benötigten elektrischen Leistung dabei sowohl praktisch, insbesondere durch aktuelle und/oder vorausgegangene Leistungsmessungen als auch theoretisch, insbesondere aufgrund der Nenndaten der Verbraucher, mittels in Datenbanken hinterlegten Werten des Leistungsbedarfs und/oder aufgrund von Leistungsberechnungen, erfolgen kann. Auch eine Kombination einer Messung von Werten sowie die Verwendung gespeicherter Daten ist dazu denkbar. Insgesamt hat das Ermitteln der benötigten elektrischen Leistung jeder der Arbeitsstellen den Zweck zu bestimmen, wie hoch der Leistungsbedarf des auszuführenden Betriebsvorgangs, beispielsweise eines Hochlaufens eines Spinnrotors, ist. Hierzu reicht grundsätzlich die Ermittlung einiger Kennwerte, wie die maximale Leistungsaufnahme, aus, wobei jedoch bevorzugt der gesamte zeitliche Verlauf der Leistungsaufnahme erfasst und/oder ausgewertet wird.

Nachdem die benötigte Leistung ermittelt wurde und die maximale Leistung des Netzteils bekannt ist, erfolgt erfindungsgemäß ein Ermitteln der zugleich ausführbaren Betriebsvorgänge, ohne dass zu einem beliebigen Zeitpunkt der geplanten Betriebsvorgänge die maximale Leistung des Netzteils überschritten wird. Als maximale Leistung des Netzteils wird bevorzugt die Nennleistung des Netzteils oder die tatsächlich maximal zur Verfügung stellbare Leistung verwendet.

Zudem erfolgt erfindungsgemäß in einem Verfahrensschritt mit dem Ermitteln der zugleich ausführbaren Betriebsvorgänge oder auch unmittelbar danach ein Erstellen optimierter Betriebsdaten der mehreren, gemeinsam mittels eines Netzteils versorgten Arbeitsstellen, um die maximale Leistung des Netzteils bestmöglich auszunutzen.

Die Betriebsdaten können dabei beliebige Daten zum Betrieb der Arbeitsstellen, bevorzugt wenigstens eines mittels des Netzteils betriebenen elektrischen Verbrauchers, besonders bevorzugt aller mittels des Netzteils betriebenen elektrischen Verbraucher und ganz besonders bevorzugt sämtlicher elektrischen Verbraucher der Arbeitsstellen sein. Dabei können die Betriebsdaten insbesondere den zeitlichen Ablauf der Betriebsvorgänge beinhalten, beispielsweise den Startzeitpunkt, die Hochfahrdauer und/oder den Betriebsmodus eines oder mehrerer elektrischer Verbraucher. Ganz besonders bevorzugt umfassen die Betriebsdaten den Zeitpunkt und/oder die Dauer des Anspinnens und/oder des Hochlaufens der Spinnrotormotoren einer Spinnmaschine. Auch kann die zeitliche Verschiebung mehrerer Betriebsvorgänge zueinander Teil der Optimierung sein, beispielsweise um Leistungsspitzen des oder der Betriebsvorgänge zeitlich so zueinander zu verschieben, dass zu keinem Zeitpunkt die maximale Leistung des Netzteils erreicht bzw. überschritten wird.

Entsprechend beinhalten die optimierten Betriebsdaten bevorzugt einen optimierten Steuerablauf der Inbetriebnahme und/oder des Betriebs wenigstens einer Arbeitsstelle bzw. des wenigstens einen elektrischen Verbrauchers, bevorzugt aller mit dem jeweiligen Netzteil verbundenen Arbeitsstellen und ganz besonders bevorzugt der gesamten Textilmaschine, insbesondere der gesamten Spinnmaschine.

Die erstellten optimierten Betriebsdaten können dann zur Ansteuerung der elektrischen Verbraucher bereitgestellt und/oder an eine entsprechende Steuereinheit übermittelt werden. Dabei kann das Erstellen der optimierten Betriebsdaten bereits in der Steuereinheit, einer übergeordneten Steuereinheit oder aber auch in einer getrennten Datenverarbeitungseinheit erfolgen. Generell ist bevorzugt, dass das erfindungsgemäße Verfahren im Informator der Textilmaschine abläuft.

Das Ermitteln der benötigten Leistung und/oder das Ermitteln der zugleich ausführbaren Betriebsvorgänge und/oder das Erstellen optimierter Betriebsdaten erfolgt erfindungsgemäß unter Berücksichtigung der aktuellen Partiedaten, da diese Partiedaten die benötigte Leistung bzw. die Leistungsaufnahme der jeweiligen Arbeitsstelle beeinflussen und daher bei einer guten Optimierung der Betriebsdaten zwingend berücksichtigt werden müssen. Insbesondere besteht die Gefahr, dass aufgrund der aktuellen Partie die Leistungsaufnahme der Arbeitsstellen überdurchschnittlich hoch ist und daher eine Ansteuerung mittels partieunabhängig optimierter Betriebsdaten zu einer Überlastung des Netzteils, zu Fehlfunktionen der Arbeitsstellen oder schlimmstenfalls zu einer Beschädigung der Textilmaschine führen könnte.

Somit ist es gemäß der Erfindung zwingend erforderlich, die optimierten Betriebsdaten bezogen auf die jeweilige Partie zu erstellen. Entsprechend ist es bevorzugt, dass das erfindungsgemäße Verfahren wenigstens dann ausgeführt wird, wenn die Partie wechselt und/oder wenn die aktuellen Partiedaten signifikant von den Daten der vorherigen und/oder allen vorhergegangenen Partien abweichen. Entsprechend werden die benötigte Leistung und/oder die zugleich ausführbaren Betriebsvorgänge bevorzugt zwingend in Abhängigkeit wenigstens eines Teils der Partiedaten und besonders bevorzugt in Abhängigkeit aller wesentlichen Partiedaten ermittelt bzw. die optimierten Betriebsdaten entsprechend erstellt.

Generell ist es bevorzugt, dass die berücksichtigten Partiedaten Spinnparameter, Werte des verwendeten Materials zum Herstellen des Textils und/oder Maschinendaten umfassen. Besonders bevorzugt umfassen die berücksichtigten aktuellen Partiedaten die Art, die Zusammensetzung und/oder die Maße des verwendeten Materials zum Herstellen des Textils, die Umdrehungszahl eines Antriebsmotors und/oder eines Spinnrotors und/oder die Beschleunigung eines Antriebsmotors beim Starten der Arbeitsstelle, insbesondere beim Hochlaufen des Spinnrotors bzw. beim Anspinnen. Insbesondere die chemische Zusammensetzung und/oder die physikalischen Eigenschaften des verwendeten Fasermaterials, wie die Faserlänge, der Faserdurchmesser und/oder die Durchmischung verschiedener Fasermaterialien, werden ganz besonders bevorzugt als Partiedaten berücksichtigt.

Unter den aktuellen Partiedaten werden die Daten zu der Partie verstanden, die gerade auf der Textilmaschine bearbeitet wird, wobei die Partiedaten bevorzugt von der jeweiligen Textilmaschine bzw. von der jeweiligen Arbeitsstelle und/oder von dem jeweiligen herzustellenden Textil abhängig sind.

Weiterhin hängt die benötigte elektrische Leistung aber auch von den weiteren elektrischen Verbrauchern der Arbeitsstelle und deren Ansteuerung bzw. Betriebsart ab, die von Partie zu Partie unterschiedlich sein können und insbesondere dann auch vorteilhafterweise berücksichtigt werden sollten.

Bei einer vorteilhaften Weiterbildung des erfindungsgemäßen Verfahrens zur Leistungssteuerung erfolgt das Ermitteln der benötigten elektrischen Leistung einer Arbeitsstelle und insbesondere jeder mittels des Netzteils versorgten Arbeitsstelle durch einen Teststart und/oder einen Testbetrieb der Arbeitsstelle, insbesondere mit den aktuellen Partiedaten. Der Teststart ist dabei bevorzugt ein Testanspinnen bzw. ein Testhochlaufen der jeweiligen Arbeitsstelle und insbesondere eines Spinnrotors der Arbeitsstelle. Dabei reicht es generell aus, wenn nur eine einzelne Arbeitsstelle einen Teststart und/oder einen Testbetrieb durchführt, insbesondere, wenn für jede der Arbeitsstellen die Leistungsaufnahme unter Standardbedingungen bzw. im Regelbetrieb bekannt ist und somit bevorzugt die im Betrieb auftretenden Leistungsunterschiede zwischen den einzelnen Arbeitsstellen auch rechnerisch ermittelt und entsprechend berücksichtigt werden können.

Besonders bevorzugt erfolgt jedoch für jede einzelne, mittels des Netzteils versorgte Arbeitsstelle ein Teststart und/oder ein Testbetrieb, wobei dies sowohl nacheinander als auch für mehrere oder alle Arbeitsstellen zugleich erfolgen kann, soweit das Netzteil ausreichend elektrische Leistung zur Verfügung stellen kann. In einem solchen Testbetrieb ist es dabei nicht wesentlich, ob es aufgrund einer unzureichenden Leistungsversorgung zum Ausfall einzelner Arbeitsstellen kommt, sodass auch ein Test mit allen Arbeitsstellen zugleich versucht werden kann.

Bei einer weiteren vorteilhaften Weiterbildung des Verfahrens zur Leistungssteuerung erfolgt das Ermitteln der benötigten elektrischen Leistung einer Arbeitsstelle und insbesondere jeder mittels des Netzteils versorgten Arbeitsstelle durch ein Überwachen des Hochlaufens bzw. des Startens und/oder des regulären Betriebs der jeweiligen Arbeitsstelle, insbesondere mit den aktuellen Partiedaten. Insbesondere werden bei einem Anspinnen bzw. Hochlaufen jeder einzelnen Arbeitsstelle während des Betriebs die Leistungsdaten und insbesondere die Leistungsaufnahme des Antriebsmotors und/oder der gesamten Arbeitsstelle wenigstens einmal und bevorzugt bei jedem Anspinnen bzw. Hochlaufen überwacht und aufgenommen, ausgewertet und bevorzugt auch gespeichert. Besonders bevorzugt wird dabei ein konventionelles, meist sequentielles Hochlaufen aller Spinnrotoren aller mittels eines Netzteils versorgten Arbeits- bzw. Spinnstellen überwacht und die Leistungsaufnahme, insbesondere deren zeitlicher Verlauf, aufgenommen und/oder ausgewertet. Alternativ oder zusätzlich kann auch eine Überwachung der maximalen Leistung bzw. maximalen Leistungsaufnahme erfolgen.

Eine bevorzugte Weiterbildung des erfindungsgemäßen Verfahrens zur Leistungssteuerung sieht vor, dass die ermittelten Daten der benötigten Leistung mit den jeweiligen Partiedaten verknüpft gespeichert werden, um daraus optimierte Betriebsdaten erstellen zu können. Das Speichern der Daten erfolgt dabei bevorzugt in einer Datenbank. Dabei werden insbesondere Daten jeder spezifischen Arbeitsstelle, generalisierte Daten über alle Arbeitsstellen und/oder die jeweiligen Betriebsparameter und/oder Ergebnisse eines Teststarts, eines Testbetriebs und/oder einer Überwachung des Hochlaufens gespeichert bzw. in der Datenbank hinterlegt. Das Erstellen optimierter Betriebsdaten kann dabei unmittelbar nach dem Ermitteln der benötigten elektrischen Leistung oder aber zu einem beliebigen späteren Zeitpunkt durch einen Abruf der Daten aus der Datenbank erfolgen. Bevorzugt ist die Datenbank im Informator oder in einer Steuereinheit der Textilmaschine hinterlegt. Darüber hinaus ist aber zusätzlich oder alternativ auch eine Kommunikation der Textilmaschine mit einer externen Datenbank denkbar.

Um eine besonders genaue Leistungssteuerung zu erreichen, sieht eine vorteilhafte Ausgestaltung des erfindungsgemäßen Verfahrens vor, dass auf Basis der jeweiligen Partiedaten und/oder der jeweiligen Maschineneinstellungen sowie den in einer Datenbank hinterlegten Daten der benötigten elektrischen Leistung eine Leistungsprognose für den jeweils geplanten Betriebsablauf erstellt wird und im Rahmen des Erstellens optimierter Betriebsdaten geprüft wird, ob das gemeinsame Netzteil eine ausreichend hohe Leistung zur Verfügung stellen kann, um zeitgleich einen weiteren Betriebsvorgang, beispielsweise ein Hochlaufen einer weiteren Arbeitsstelle, zu ermöglichen. Entsprechend werden die optimierten Betriebsdaten so erstellt, dass die verfügbare Gesamtleistung bestmöglich genutzt wird, aber zugleich sichergestellt ist, dass im zeitlichen Verlauf zu keinem Zeitpunkt eine höhere Leistung als die verfügbare Gesamt- bzw. Nennleistung des Netzteils benötigt wird.

Darüber hinaus ist bevorzugt, dass das Ermitteln der benötigten elektrischen Leistung jeder Arbeitsstelle ausschließlich oder zusätzlich auf Basis von in einer Datenbank hinterlegten Daten für ähnliche Partiedaten erfolgt, sodass auch für einen Satz von Partiedaten, der bislang nicht verwendet wurde, bereits eine Optimierung der Betriebsdaten aufgrund eines ähnlichen Satzes von Partiedaten möglich ist.

Obwohl mittels des erfindungsgemäßen Verfahrens bereits eine sehr genaue Steuerung möglich ist, sieht eine bevorzugte Ausgestaltung des Verfahrens eine Rückkopplung bzw. ein Feedback vor, wobei besonders bevorzugt eine Optimierung der Leistungssteuerung durch ein Erfassen der tatsächlichen elektrischen Leistung des Netzteils während des Betriebs der Textilmaschine mit den optimierten Betriebsdaten erfolgt und nachfolgend ein Abgleich mit der ermittelten benötigten elektrischen Leistung und/oder einem Ergebnis der Leistungsprognose erfolgt sowie die Korrekturdaten in einer Datenbank gespeichert werden und/oder eine Korrektur weiterer optimierter Betriebsdaten erfolgt.

Eine bevorzugte Ausgestaltung des erfindungsgemäßen Verfahrens zur Leistungssteuerung sieht vor, dass während des Betriebs der Textilmaschine mit den erstellten optimierten Betriebsdaten die noch verfügbare Leistung des Netzteils abgerufen wird und diese noch verfügbare Leistung nachfolgend bei der weiteren Optimierung der Betriebsparameter berücksichtigt wird, wobei bevorzugt geprüft wird, ob eine weitere Arbeitsstelle hochlaufen darf und/oder betrieben werden kann. Die noch verfügbare Leistung des Netzteils ist dabei insbesondere zu jedem Zeitpunkt die Differenz aus der aktuell tatsächlich abgerufenen bzw. bereitgestellten Leistung und der Nennleistung bzw. der maximalen Leistung des Netzteils.

Darüber hinaus ist es vorteilhaft, dass während des Betriebs der Textilmaschine mit den erstellten optimierten Betriebsdaten kontinuierlich die tatsächliche Leistungsaufnahme überwacht wird und bevorzugt bei einer Überschreitung des Wertes der Leistungsprognose und/oder bei einer Überschreitung einer festgelegten Maximalleistung eine Anpassung der optimierten Betriebsdaten vorgenommen und/oder eine Arbeitsstelle heruntergefahren bzw. außer Betrieb genommen wird, sodass ein Betriebsausfall, eine Störung oder sogar eine Beschädigung aufgrund einer zu geringen zur Verfügung stehenden Leistung vermieden werden kann.

Mehrere Ausführungsbeispiele des Verfahrens zur Leistungssteuerung einer Textilmaschine werden nachfolgend näher beschrieben:
Bei einer ersten Ausführung eines solchen Verfahrens wird das Hochlaufen von Spinnstellen einer Spinnmaschine optimiert, wobei jeweils vier Spinnstellen gemeinsam über ein Spinnstellennetzteil mit elektrischer Leistung versorgt werden. Dabei beträgt die Dauerleistung des Spinnstellennetzteils 4 x 300 W sowie mittels eines zusätzlichen Ausgangs noch einmal 350 W. Diese Nennleistung des Spinnstellennetzteils reicht aus, um vier Spinnstellen einschließlich elektrischer Motoren zum Antrieb von Spinnrotoren mit einer hohen Umdrehungszahl zu betreiben.

Für den Anspinnvorgang, d.h. den Rotormotorhochlauf, wird hingegen eine deutlich höhere Leistung als für den regulären Betrieb benötigt, sodass im Stand der Technik ein sequentielles Hochlaufen vorgenommen wird, wobei der erste Spinnrotor über eine Dauer von 70 Sekunden hochläuft und erst beim Erreichen seiner Betriebsdrehzahl der nächste Spinnrotor hochlaufen gelassen wird, was dann abermals 70 Sekunden dauert, sodass die gesamte Hochlaufzeit aller vier Spinnrotoren wenigstens 280 Sekunden beträgt.

Um die Hochlaufzeit sowie den gesamten Betriebsablauf der Spinnmaschine, insbesondere zum Hochlaufen der Spinnrotoren, zu optimieren, wird jeder der Spinnrotoren einzeln und nacheinander hochlaufen gelassen und dabei der zeitliche Verlauf der elektrischen Leistung erfasst. Diese zum Hochlaufen benötigte Leistung wird dann in einer Datenbank im Informator der Spinnmaschine gemeinsam mit den Partiedaten, d.h. den Spinnparametern und den Maschinendaten, gespeichert, sodass für jede Spinnstelle in Abhängigkeit der aktuellen Partiedaten die benötigte elektrische Leistung bekannt ist. Dabei ist es wesentlich, dass eine Erfassung in Abhängigkeit der Partiedaten erfolgt, da die benötigte Leistung erheblich mit einer Änderung der Partiedaten variiert und dabei insbesondere von dem verwendeten Spinnrotor, dem Rotormotor, der gewählten Umdrehungszahl des Spinnrotors sowie von weiteren Spinnparametern abhängt, die wiederum in Abhängigkeit des zu verarbeitenden Fasermaterials und/oder des zu erstellenden Garns gewählt werden müssen, sodass beispielsweise die zu erreichende Garnstärke, Garnfestigkeit, Materialzusammensetzung des Garns sowie der Aufbau des Garns einen wesentlichen Einfluss auf die benötigte elektrische Leistung haben.

Nachdem die benötigte elektrische Leistung der einzelnen Spinnstellen für einen Betriebsablauf, beispielsweise das Hochlaufen, für genau den aktuellen Satz von Partiedaten bekannt ist, kann nachfolgend eine Leistungsprognose erstellt und insbesondere errechnet werden, wie viele Spinnstellen bzw. wie viele Betriebsvorgänge zugleich ausgeführt werden können. Aus diesen Informationen können dann optimierte Betriebsdaten berechnet werden, die den Betriebsablauf, z.B. des Hochlaufens, bestimmen. Hierzu können beispielsweise die Startzeitpunkte der einzelnen Spinnrotoren, deren Beschleunigung sowie deren Hochlaufzeit variiert werden, sodass die vom Spinnstellennetzteil bereitgestellte Dauer- bzw. Nennleistung bestmöglich eingesetzt wird und die Spinnmaschine im Idealfall zu jedem Zeitpunkt mit einer hohen Auslastung des Spinnstellennetzteils betrieben werden kann.

Hierdurch ist es typischerweise möglich, wenigstens zwei Spinnstellen zugleich hochlaufen zu lassen sowie ggf. das Hochlaufen weiterer Spinnstellen bereits vor einem vollständigen Abschluss des Hochlaufens der bereits beschleunigten Spinnstellen zu beginnen, wodurch typischerweise die Hochlaufzeit um 25% - 50% verkürzt werden kann. Jedoch muss in jedem Fall eine Überlastung des Spinnstellennetzteils vermieden werden, wodurch es essentiell ist, die Partiedaten, die zu einer erhöhten benötigten Leistung führen können, bei der Leistungsprognose zu berücksichtigen.

Eine zweite Ausführung des erfindungsgemäßen Verfahrens unterscheidet sich von einer ersten Ausführung im Wesentlichen nur dadurch, dass das Ermitteln der benötigten elektrischen Leistung jeder der Spinnstellen nicht mittels eines aktuell durchgeführten Testhochlaufs erfolgt, sondern in der Datenbank die Daten eines vorhergegangenen Testhochlaufs dieser Spinnstelle mit den identischen Partiedaten gesucht werden. Liegen solche Daten identischer Partiedaten vor, werden diese automatisch verwendet. Liegen identische Daten nicht vor, wird nach einem möglichst ähnlichen Satz hinterlegter Partiedaten gesucht und dann entschieden, ob eine ausreichende Ähnlichkeit bzw. nur eine sehr geringe Abweichung der Partiedaten vorliegt. Liegen beispielsweise vollständig identische Maschinendaten vor, d.h. wurde die Spinnstelle der Spinnmaschine nicht verändert, und sind die Spinnparameter ebenfalls nahezu identisch, beispielsweise weil nur andersfarbige Fasern oder Fasern mit nur einer sehr geringen anderen chemischen Zusammensetzung oder Faserlänge verwendet werden, können entweder die für den fast identischen Satz an Partiedaten erfassten Werte der benötigten elektrischen Leistung dieser Spinnstelle verwendet werden oder aber es kann eine Interpolation auf die geänderten Parameter, insbesondere mittels zahlreicher Datenbankeinträge, erfolgen. Sind jedoch die aktuellen Partiedaten zu allen in der Datenbank hinterlegten Partiedaten zu unterschiedlich, so wird automatisch ein Testhochlauf bzw. ein sequentielles Hochlaufen initiiert und dabei die benötigte elektrische Leistung erfasst. Zudem werden diese Daten dann als neuer Eintrag zur zukünftigen Verwendung in die Datenbank aufgenommen.

Bei einer dritten Ausführung des Verfahrens wird genau wie bei den vorherigen Ausführungen die benötigte elektrische Leistung jeder Spinnstelle ermittelt sowie in Abhängigkeit der Partiedaten bestimmt, wie viele Spinnstellen zugleich hochlaufen können sowie die entsprechenden optimierten Betriebsdaten erstellt. Diese Betriebsdaten werden dann verwendet, um alle vier Spinnstellen zugleich hochlaufen zu lassen. Jedoch wird dabei kontinuierlich die tatsächlich aufgenommene elektrische Leistung der Spinnstellen an den das Verfahren durchführenden Informator der Spinnmaschine zurückgespielt, wo die tatsächlich aufgenommene elektrische Leistung mit der zuvor erstellten Prognose verglichen sowie die Übereinstimmung bewertet und ebenfalls in der Datenbank hinterlegt wird, um zukünftige Prognosen zu verbessern.

Zudem wird die tatsächlich aufgenommene elektrische Leistung dahingehend überwacht, ob ein Sicherheitsabstand zur maximalen Nennleistung des Spinnstellennetzteils unterschritten wird. Ist dies der Fall, so werden umgehend korrigierte optimierte Betriebsdaten bestimmt und verwendet, was in den meisten Fällen dazu führen wird, dass das Hochspinnen wenigstens einer der Spinnstellen verzögert, verlangsamt oder sogar abgebrochen wird, um eine Überlastung des Spinnstellennetzteils zu vermeiden.

## Patentansprüche

1. Verfahren zur Leistungssteuerung einer Textilmaschine mit mehreren zugleich betriebenen Arbeitsstellen sowie mit wenigstens einem Netzteil zur gemeinsamen Leistungsversorgung der mehreren Arbeitsstellen, mit den Schritten
- Ermitteln der benötigten elektrischen Leistung jeder der Arbeitsstellen,
- Ermitteln der zugleich ausführbaren Betriebsvorgänge auf Basis der ermittelten benötigten Leistung sowie einer maximalen Leistung des Netzteils, und
- Erstellen optimierter Betriebsdaten der mehreren, gemeinsam mittels eines Netzteils versorgten Arbeitsstellen, um die maximale Leistung des Netzteils bestmöglich auszunutzen,
- wobei das Ermitteln der benötigten elektrischen Leistung und/oder das Erstellen optimierter Betriebsdaten unter Berücksichtigung der aktuellen Partiedaten erfolgt.

2. Verfahren zur Leistungssteuerung nach Anspruch 1, **dadurch gekennzeichnet, dass** die berücksichtigten aktuellen Partiedaten die Art, die Zusammensetzung und/oder die Maße des verwendeten Materials zum Herstellen des Textils, die Umdrehungszahl eines Antriebsmotors und/oder eines Spinnrotors und/oder die Beschleunigung eines Antriebsmotors beim Starten der Arbeitsstelle umfassen.

3. Verfahren zur Leistungssteuerung nach Anspruch 1 oder 2, **dadurch gekennzeichnet, dass** das Ermitteln der benötigten elektrischen Leistung einer Arbeitsstelle durch einen Teststart und/oder einen Testbetrieb der Arbeitsstelle mit den aktuellen Partiedaten erfolgt.

4. Verfahren zur Leistungssteuerung nach wenigstens einem der vorhergehenden Ansprüche, **dadurch gekennzeichnet, dass** das Ermitteln der benötigten elektrischen Leistung einer Arbeitsstelle durch ein Überwachen des Hochlaufens und/oder des regulären Betriebs der jeweiligen Arbeitsstelle mit den aktuellen Partiedaten erfolgt.

5. Verfahren zur Leistungssteuerung nach wenigstens einem der vorhergehenden Ansprüche, **dadurch gekennzeichnet, dass** die ermittelten Daten der benötigten Leistung in einer Datenbank mit den jeweiligen Partiedaten verknüpft gespeichert werden, um daraus optimierte Betriebsdaten erstellen zu können.

6. Verfahren zur Leistungssteuerung nach wenigstens einem der vorhergehenden Ansprüche, **dadurch gekennzeichnet, dass** auf Basis der jeweiligen Partiedaten und/oder der jeweiligen Maschineneinstellungen sowie den in einer Datenbank hinterlegten Daten der benötigten elektrischen Leistung eine Leistungsprognose für den jeweils geplanten Betriebsablauf erstellt wird und im Rahmen des Erstellens optimierter Betriebsdaten geprüft wird, ob das gemeinsame Netzteil eine ausreichend hohe Leistung zur Verfügung stellen kann, um zeitgleich einen weiteren Betriebsvorgang zu ermöglichen.

7. Verfahren zur Leistungssteuerung nach wenigstens einem der vorhergehenden Ansprüche, **dadurch gekennzeichnet, dass** das Ermitteln der benötigten elektrischen Leistung jeder Arbeitsstelle auf Basis von in einer Datenbank hinterlegten Daten für ähnliche Partiedaten erfolgt.

8. Verfahren zur Leistungssteuerung nach wenigstens einem der vorhergehenden Ansprüche, **gekennzeichnet durch** eine Optimierung der Leistungssteuerung durch ein Erfassen der tatsächlichen elektrischen Leistung des Netzteils während des Betriebs der Textilmaschine mit den optimierten Betriebsdaten und nachfolgend durch einen Abgleich mit der ermittelten benötigten elektrischen Leistung und/oder einem Ergebnis der Leistungsprognose sowie durch ein Speichern der Korrekturdaten in der Datenbank und/oder eine Korrektur weiterer optimierter Betriebsdaten beim Erstellen.

9. Verfahren zur Leistungssteuerung nach wenigstens einem der vorhergehenden Ansprüche, **dadurch gekennzeichnet, dass** während des Betriebs der Textilmaschine mit den erstellten optimierten Betriebsdaten die noch verfügbare Leistung des Netzteils abgerufen und nachfolgend bei der weiteren Optimierung der Betriebsparameter berücksichtigt wird, wobei geprüft wird, ob eine weitere Arbeitsstelle hochlaufen darf und/oder betrieben werden kann.

10. Verfahren zur Leistungssteuerung nach wenigstens einem der vorhergehenden Ansprüche, **dadurch gekennzeichnet, dass** während des Betriebs der Textilmaschine mit den erstellten optimierten Betriebsdaten kontinuierlich die tatsächliche Leistungsaufnahme überwacht wird und bei einer Überschreitung des Wertes der Leistungsprognose und/oder bei einer Überschreitung einer festgelegten Maximalleistung eine Anpassung der optimierten Betriebsdaten vorgenommen und/oder eine Arbeitsstelle heruntergefahren bzw. außer Betrieb genommen wird.

11. Leistungssteuereinheit für eine Textilmaschine mit mehreren zugleich betriebenen Arbeitsstellen sowie mit wenigstens einem Netzteil zur gemeinsamen Leistungsversorgung mehrerer Arbeitsstellen, wobei die Leistungssteuereinheit gebildet ist,
- die benötigte elektrische Leistung jeder der Arbeitsstellen zu ermitteln,
- die zugleich ausführbaren Betriebsvorgänge auf Basis der ermittelten benötigten Leistung sowie einer maximalen Leistung des Netzteils zu ermitteln, und
- optimierte Betriebsdaten der mehreren, gemeinsam mittels eines Netzteils versorgten Arbeitsstellen zu erstellen, um die maximale Leistung des Netzteils bestmöglich zu nutzen,
- wobei das Ermitteln der benötigten elektrischen Leistung und/oder das Erstellen optimierter Betriebsdaten unter Berücksichtigung der aktuellen Partiedaten erfolgt.

12. Spinnmaschine mit einer Leistungssteuereinheit, insbesondere nach Anspruch 11, mit mehreren zugleich betriebenen Arbeitsstellen mit jeweils einem Spinnrotor sowie mit wenigstens einem Netzteil zur gemeinsamen Leistungsversorgung mehrerer Arbeitsstellen, wobei die Leistungssteuereinheit derart gebildet ist, dass diese die benötigte elektrische Leistung jeder der Arbeitsstellen ermittelt, die zugleich hochzufahrenden und/oder zu betreibenden Spinnrotoren auf Basis der ermittelten benötigten Leistung sowie einer maximalen Leistung des Netzteils ermittelt und optimierte Betriebsdaten der mehreren, gemeinsam mittels eines Netzteils versorgten Arbeitsstellen erstellt, um die maximale Leistung des Netzteils bestmöglich zu nutzen, wobei das Ermitteln der benötigten Leistung und/oder das Erstellen optimierter Betriebsdaten unter Berücksichtigung der aktuellen Partiedaten erfolgt.
